(19) **Europäisches Patentamt / European Patent Office / Office européen des brevets**

(11) **EP 3 066 789 B1**

(12) **FASCICULE DE BREVET EUROPEEN**

(45) Date de publication et mention de la délivrance du brevet:
**16.05.2018 Bulletin 2018/20**

(21) Numéro de dépôt: **14799009.7**

(22) Date de dépôt: **04.11.2014**

(51) Int Cl.:
**H04L 12/26** *(2006.01)*

(86) Numéro de dépôt international:
**PCT/IB2014/065783**

(87) Numéro de publication internationale:
**WO 2015/063744 (07.05.2015 Gazette 2015/18)**

(54) **ARCHITECTURE DE TEST DE PROTOCOLES**

ARCHITEKTUR FÜR TESTPROTOKOLLE

ARCHITECTURE FOR TESTING PROTOCOLS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2013 FR 1360794**

(43) Date de publication de la demande:
**14.09.2016 Bulletin 2016/37**

(73) Titulaire: **Institut Mines-Telecom / Telecom Sudparis**
**91000 Evry (FR)**

(72) Inventeurs:
• **MAAG, Stéphane**
**F-91700 Sainte Genevieve Des Bois (FR)**

• **CHE, Xiaoping**
**F-91000 Evry (FR)**

(74) Mandataire: **Nony**
**11 rue Saint-Georges**
**75009 Paris (FR)**

(56) Documents cités:
**US-A1- 2004 054 776     US-A1- 2012 079 324**

• **Malik GHALLAB, Amine MOUNIR ALOUI: "Managing Efficiently Temporal RelationsThrough Indexed Spanning Trees", International Joint Conferences on Artificial Intelligence , 25 août 1989 (1989-08-25), XP002726335, Chicago Extrait de l'Internet: URL:http://ijcai.org/Past%20Proceedings/IJCAI-89-VOL-2/PDF/072.pdf [extrait le 2014-06-27]**

**Description**

La présente invention concerne un système de test dans le cadre de l'ingénierie des protocoles et services de communication, en particulier dans les réseaux, fournissant des verdicts pour des propriétés protocolaires fonctionnelles.

Les communications sont essentielles de nos jours et, un nombre de plus en plus important de services étant disponible en ligne, les réseaux d'ordinateurs continuent de grandir, et de nouveaux protocoles et services de communication sont constamment développés. Des standards de communication sont alors indispensables pour permettre aux différents systèmes d'interagir et de travailler ensemble. Ces standards sont formellement vérifiés, mais leurs implémentations peuvent contenir des fautes et doivent être testées, afin de vérifier si elles possèdent un ensemble de propriétés désirées et de comportements attendus.

Un protocole est un ensemble de règles de communication et de formats de messages permettant la communication entre des entités d'un système, distribué ou non.

Il existe deux approches pour tester la conformité et la performance d'un protocole de communication : un test dit actif, qui contrôle le protocole sous test et observe ses comportements par stimulation, et un test dit passif, qui collecte des traces d'exécution, notamment binaires, et les analyse a posteriori. Ces traces correspondent à des séquences de messages entrants et sortants du protocole, et comportent des parties de contrôle et des données, correspondant respectivement à l'entête et au corps des messages. Les traces sont généralement découpées en paquets de différentes tailles.

Le test passif est ainsi appliqué en « *post-capture* » : des traces finies, c'est-à-dire de taille déterminée, sont collectées et analysées. Cette approche est très difficilement automatisable et nécessite, dans de nombreux cas, un modèle formel du protocole, par exemple de type Unified Modeling Language (UML) ou Systems Modeling Language (SysML). En outre, travailler sur des traces finies augmente le nombre de verdicts inconclusifs, c'est-à-dire où le statut de la propriété sous test est incertain, et de faux-positifs.

Les solutions de test passif connues sont nombreuses. Elles sont proposées notamment par des opérateurs, des fournisseurs de services ou des laboratoires de recherche.
ligne, appelé « *runtime monitoring* » en anglais, c'est-à-dire effectué pendant l'exécution du protocole sous test, développés dans des centres de recherche tels que Technische Universitat Munchen. L'inconvénient de ces approches est la nécessité de construire au préalable un modèle formel ou semi-formel du protocole sous test.

La demande WO 03/047280 décrit l'évaluation des performances d'un équipement GPRS ou 3G. Dans cette approche, c'est l'équipement qui est testé et non le protocole de communication, le cahier des charges du protocole n'étant ainsi pas formalisé.

La demande US 2007/0124456 décrit une méthode de test hors ligne et nécessitant la collecte de traces. Les verdicts inconclusifs ne sont pas traités.

La demande US 2004/0054776 décrit une méthode d'analyse de performances d'un réseau à partir de l'analyse du trafic et d'analyseurs protocolaires. L'analyse se fait hors ligne en considérant la topologie du réseau.

D'autres approches sont basées sur des systèmes de diagnostic et/ou de suivi. C'est notamment le cas d'outils fournis par des industriels, tels que par exemple les outils d'analyses d'EXFO ou de Microsoft Open Spécification NM tool. Ces outils performants visent à contrôler et analyser les protocoles de communication, mais pas à les tester de manière passive contre des propriétés issues du cahier des charges et/ou des standards de ces protocoles. Le test se fait ainsi en post-analyse, quand un opérateur alerte sur une observation inattendue ou un suivi anormal. Ces outils génèrent uniquement une vue du protocole dans le temps mais ne le testent pas passivement. Certains de ces outils fournissent des suites de test, ce qui est à rapprocher du test actif des protocoles.

De nombreuses approches ne considèrent que la partie de contrôle des traces protocolaires observées. La présence de verdicts faussement positifs est ainsi augmentée.

En outre, certaines approches de test passif en ligne existent, ou « *runtime* » en anglais, comme les solutions proposées par l'entreprise Elvior, mais sont limitées par les tailles des mémoires tampon utilisées. Des coupures dans le test surviennent donc le temps de vider ces mémoires, par exemple pendant dix secondes, et peuvent conduire à un nombre important de verdicts inconclusifs.

Il existe un besoin de tester passivement, en ligne, de manière efficace, non intrusive et continue, les implémentations des protocoles de communication en observant leurs traces d'exécution et en y appliquant certaines méthodes d'analyse permettant de fournir un verdict de test établissant si le protocole répond ou pas au cahier des charges et/ou au standard.

L'invention a ainsi pour objet, selon un premier de ses aspects, un système de test d'un protocole, notamment un protocole d'un réseau de communication, actif sur un équipement, notamment l'unité centrale d'un ordinateur, le système de test comportant :

- un moniteur configuré pour capturer de façon continue des traces, correspondant à des séquences de messages du protocole sous test,

- un filtre des traces capturées utilisant des propriétés formalisées des exigences du protocole sous test, notamment configuré pour séparer lesdites traces en données et en parties de contrôle,
- une zone de stockage temporaire, et
- un module de transfert agencé pour transférer les traces filtrées à un testeur configuré pour émettre des verdicts en vérifiant si les traces satisfont les exigences des propriétés formalisées du protocole sous test,

système de test dans lequel, en cas de saturation du testeur conduisant à l'émission d'une notification de charge, le module de transfert interrompt le transfert des traces filtrées vers le testeur et met en mémoire au moins partiellement lesdites traces dans la zone de stockage temporaire, notamment uniquement les parties de contrôle desdites traces, avant de reprendre le transfert des traces filtrées lorsque le testeur est à nouveau disponible.

L'invention fournit une architecture de test passif en ligne, non intrusive, transparente et produisant des verdicts de test de manière autonome en analysant l'exécution d'un protocole en ligne dans son contexte, sans surcharger le processeur et la mémoire de l'équipement où fonctionne le système de test et où est actif le protocole. Les utilisateurs du réseau peuvent continuer à travailler pendant le test. Moins il y a d'activité sur l'équipement, plus le système de test peut travailler.

Pour mettre en oeuvre l'invention, il n'est pas nécessaire d'avoir un modèle formel du protocole sous test, et les propriétés protocolaires issues du standard et/ou du cahier des charges du protocole sont uniquement formalisées.

L'analyse des traces est réalisée en ligne, sans collecte préalable, ce qui permet d'automatiser le test sur des traces de taille quasiment infinie et de réduire dans un même temps le nombre de faux-positifs et de verdicts inconclusifs.

L'observation du protocole peut avoir lieu en continu, sans jamais arrêter le protocole et sans jamais interrompre l'enregistrement des traces, malgré leur taille. La notification de charge permet notamment de ne pas perdre de données bien que le test soit momentanément interrompu, afin d'alléger les filtres et les ressources utilisées sur l'équipement.

## Formalisation de protocoles

Un message d'un protocole de communication est de préférence une collection de champs de données de différents domaines. Les domaines de données peuvent être définis comme atomiques, « *atomic* » en anglais, ou composés, « *compound* » en anglais. Le domaine atomique peut être défini comme un ensemble de valeurs numériques ou de chaînes de caractères.

Une valeur composée v de taille $n > 0$ est définie par un ensemble de paires $\{(l_i, u_i) \mid l_i \in L \wedge u_i \in D_i \cup \{\in\}, i = 1...n\}$, où $L = \{l_1,..., l_n\}$ est un ensemble prédéfini de labels et $D_i$ représentent les domaines de données. Le domaine composé peut alors être défini comme l'ensemble de toutes les valeurs avec un même ensemble de labels et de domaines défini par $(L, D_1,..., D_k)$.

Pour un protocole réseau P donné, un domaine composé $M_p$ peut généralement être défini par un ensemble de labels et de domaines de données dérivés du format du message défini dans le cahier des charges du protocole.

Un message du protocole P est tout élément $m \in M_p$. Pour chaque $m \in M_p$, un nombre réel $t_m \in \mathbb{R}^+$ est ajouté, représentant le moment où le message est reçu ou envoyé par l'équipement sous test.

Par exemple, un message possible pour le protocole SIP (Session Initiation Protocol, portant la référence IETF RFC3261), spécifié en utilisant la définition précédente, est :

$$m = \{(method, \text{`INVITE'}), (time, \text{`644.294133000'}), (status, c), (from, \text{`alice@a.org'}), (to, \text{`bob@b.org'}), (cseq, \{(num, 7), (method, \text{`INVITE'})\})\}$$

Ce message représente une requête INVITE de alice@a.org à bob@b.org. La valeur de *time* '644,294133000' ($t_0$+644.204133000) est une valeur relative, l'interface du protocole, appelée PO, lançant un minuteur, correspondant à la valeur initiale $t_0$, lorsqu'il capture des traces. L'interface fournit également l'intervalle de temps relatif $T \subset \mathbb{R}^+$ pour tous les messages *m* de chaque trace.

Une *trace* peut être définie comme une séquence de messages du même protocole contenant les interactions entre un équipement sous test dans un réseau, par le biais d'une interface PO, avec un ou plusieurs pairs du réseau pendant une période de temps arbitraire. Les traces sont avantageusement découpées en paquets de données.

Un *terme* peut être défini dans la forme de Backus-Naur (BNF) par *term* ::= *e* | *x* | *x.l.l...l*, où *c* est une constante dans un certain domaine, *x* est une variable, *l* représente un label, et *x.l.l...l* est appelé un *sélecteur de variable.*

Une *substitution* est un ensemble fini de liaisons $\theta = \{x_1/term_1,...,x_k/term_k\}$, où chaque $term_i$ est un *terme* et où $x_i$ est une variable telle que et $x_i \neq x_j$ si $i \neq j$.

Un *atome* peut être défini par :

$$A ::= \overbrace{p(term, ..., term)}^{k} \\ \mid term = term \\ \mid term \neq term \\ \mid term < term \\ \mid term \dotplus term = term$$

où $p(term,...,term)$ est un prédicat de label $p$ et d'arité $k$. L'*atome temporisé* est un atome particulier défini par

$$\overbrace{p(term_t, ..., term_t)}^{k},$$

où $term_x \in T$.

Les relations entre termes et atomes peuvent être établies par des définitions de *clauses.* Une clause est une expression du type : $A_0 \leftarrow A_1 \wedge ... \wedge A_n$, où $A_0$ est l'entête de la clause et $A_1 \wedge ... \wedge A_n$ le corps de la clause, $A_i$ étant des atomes.

Une formule est définie en BNF par l'expression suivante :

$$\phi ::= A_1 \wedge ... \wedge A_n \mid \phi \rightarrow \phi \mid \forall_x \phi \mid \forall_{y \triangleright x} \phi \\ \mid \forall_{y < x} \phi \mid \exists_x \phi \mid \exists_{y \triangleright x} \phi \mid \exists_{y < x} \phi$$

où $A_1, ..., A_n$ sont des atomes, $n \geq 1$ et $x, y$ des variables utilisées pour formellement spécifier le message d'une trace. Les quantificateurs $\exists$ et $\forall$ sont communément utilisés pour définir les termes mathématiques « *il existe* » et « *pour tout* », respectivement.

Ainsi, la formule $\forall_x \phi$ signifie « *pour tous les messages x dans la trace, $\phi$ est satisfait* ». En se fondant sur les opérateurs et quantificateurs précédemment décrits, l'interprétation des formules en verdicts T « PASS », $\perp$ « FAIL », ou ? « INC », peut être réalisée.

## Système de test

La zone de stockage temporaire, le moniteur, le module de transfert et le testeur du système de test selon l'invention peuvent être intégrés dans l'équipement sous test. Dans une variante, l'ensemble de ces éléments ou certains de ces éléments sont externes à l'équipement.

Le testeur peut comporter une mémoire tampon.

La mise en mémoire des traces filtrées dans la zone de stockage temporaire peut être réalisée en utilisant des tables de hachage.

Cinq types distincts de verdicts de test par analyse fonctionnelle des observations des traces peuvent être fournis : « PASS », la trace satisfait les exigences, « FAIL », la trace ne satisfait pas les exigences, « TIME-FAIL », hors-délai, « INC », inconclusifs, et « temp-INC », temporairement inconclusifs.

Les verdicts hors-délai peuvent survenir du fait que le test se fait en ligne, et en temps réel. Un temps de repos est avantageusement utilisé pour arrêter de chercher le message ciblé dans le but de fournir des statuts en temps réel. Ce temps de repos est généralement le temps maximal de réponse écrit dans le protocole. Si le message ciblé ne peut être observé avant le temps de repos, un verdict « TIME-FAIL » sera assigné à cette propriété. Ce type de verdict n'est fourni que s'il n'y a pas de contrainte de temps dans les exigences. Dans ce dernier cas, la violation de cette exigence se traduira par un verdict « FAIL ».

Les verdicts inconclusifs peuvent correspondre au cas où une requête a été envoyée et où on attend la réponse, le statut de la propriété étant incertain. Ces verdicts surviennent principalement au début et à la fin d'un test. Si une propriété nécessite de tester les données et que, à cause du filtrage, il n'y a pas de données dans la trace mais uniquement des parties de contrôle, un verdict temporairement inconclusif peut être assigné à la propriété, et peut ensuite changer, en « PASS » ou en « FAIL », lorsque les données recommencent à arriver de la zone de stockage.

Les verdicts de test peuvent être stockés dans des fichiers, afin d'être consultés ultérieurement pour l'évaluation du protocole.

**Test de protocoles**

La formalisation des exigences informelles du protocole sous test peut être réalisée par le système de test. Cette formalisation peut être réalisée en utilisant une syntaxe et une sémantique fondées sur la logique de Horn, et peut conduire à l'établissement de formules, comme décrit dans les articles « Data-centric property formulation for passive testing of communication protocols » de Lalanne et al, IASME/WSEAS, ACC' 11/MMACTEE' 11, pages 176 à 181, et « A formal data-centric approach for passive testing of communication protocols », de Lalanne et al, IEEE/ACM Transactions on networking. La logique de Horn permet d'avoir une syntaxe simplifiée.

Dans une variante, la formalisation des exigences informelles du protocole sous test est réalisée par un module externe, en amont du procédé de test, les formules résultantes étant fournies au système de test, par exemple sous la forme de fichiers, tout en respectant la syntaxe de formalisation des exigences du protocole.

Un arbre de recouvrement indexé, ou « index spanning tree » en anglais, est ensuite avantageusement construit à partir de toutes les formules représentant les propriétés formalisées. Chaque quantificateur de chaque formule parcourt l'arbre pour construire les noeuds, ou « nodes » en anglais. L'avantage d'un tel arbre est de supprimer des liens redondants et de ne garder que les liens les plus intéressants.

L'arbre peut être construit en mettant en oeuvre l'algorithme suivant :

```
Algorithm Tree Generation(K, T, S)
Input: Set of Quantifiers S, Quantifiers K, Quantifier K containing the clauses and
atoms. T represents the final spanning tree
Output: T if the Tree T has a solution.

 (a)   if S is not empty then
 (b)      for K ∈ S and K is not empty do
 (c)         A ← pop(K)
 (d)         solved ← ⊥
 (e)         for (B₀ ← B₁ ∧ ... ∧ B_q) ∈ K do
 (f)            for (0 < i < q, 0 < j < m) do
 (g)               if (Bᵢ ∈ Tⱼ) then
 (h)                  if (!exist(Bᵢ, Tⱼ)) then
 (i)                     build(Bᵢ, Tⱼ)
 (j)                  else i++
 (k)                  push(B₀, B₁ ∧ ... ∧ B_q, K)
 (l)                  pop(B₀, B₁ ∧ ... ∧ B_q, K)
 (m)               else j++
 (n)            solved ← ⊤
 (o)         K ← pop(S)
 (p)   else useSolution(S)
 (q)   return T
```

L'arbre de recouvrement peut être construit par le système de test. Dans une variante, l'arbre de recouvrement est construit par un module externe, en amont du procédé de test, et est fourni au système de test, par exemple sous la forme de fichiers.

Le moniteur peut capturer de manière continue et consécutive les traces du protocole actif sur l'équipement sous test. Lorsque les messages sont capturés, chaque message est de préférence horodaté.

L'arbre de recouvrement est avantageusement appliqué aux traces capturées, jouant ainsi le rôle d'un filtre. Dans le même temps, l'arbre est également envoyé au testeur avec la définition des verdicts, calculés par la procédure décrite dans l'article de Che et al, « A logic-based passive testing approach for the validation of communicating protocols », conférence ENASE 2012, Pologne, pages 53 à 64. L'arbre permet d'optimiser le calcul des verdicts tout en considérant les données pertinentes transportées.

Les traces capturées peuvent parcourir l'arbre, et être ensuite filtrées en différents ensembles de données. Les messages non nécessaires, c'est-à-dire non requis par les exigences du protocole, peuvent être filtrés dans un ensemble « Inconnu », ou « Unknown » en anglais, et ne sont, de préférence, pas pris en compte dans la suite du test. Cette étape permet de réduire le temps de traitement, puisque des comparaisons inutiles concernant des messages non pertinents sont évitées.

Les traces filtrées peuvent être transférées au testeur quand ce dernier a les capacités nécessaires pour poursuivre le test. Si la priorité du testeur doit être baissée, afin de décharger le processeur et/ou la mémoire de l'équipement sous test, par exemple car ils doivent être utilisés pour une autre tâche par l'utilisateur, une notification de charge est avantageusement émise dans le but d'arrêter le transfert des traces filtrées au testeur, et de les mettre en mémoire dans l'espace de stockage temporaire.

Dans une variante ou en combinaison, quand la mémoire tampon du testeur atteint la limite de quantité de données pouvant être traitées, une notification de charge peut également être émise pour interrompre le transfert des traces filtrées et les stocker dans la zone de stockage temporaire. Plus précisément, lorsque les traces filtrées sont transférées à la mémoire tampon du testeur, une fonction servant à vérifier si cette mémoire est en dépassement, ou « *overflow* » en anglais, peut être utilisée. Si la mémoire tampon a déjà atteint sa capacité maximale, l'équipement peut être notifié afin de rediriger les traces vers la zone de stockage temporaire pour éviter le dépassement. Au contraire, si la mémoire tampon du testeur est dans un état stable, une notification de disponibilité peut être envoyée à la zone de stockage temporaire, pour relâcher les traces stockées, et à l'équipement, pour retourner au processus normal de transfert des traces.

Les traces sont ainsi doublement filtrées, par l'arbre de recouvrement et par le principe de notification de charge.

Selon le format des messages du protocole sous test, différentes méthodes de mise en mémoire temporaire peuvent être appliquées. Si la taille de l'entête du message est plus grande que celle de son corps, c'est-à-dire s'il y a plus de parties de contrôle que de données, le message entier peut être mis en mémoire dans l'espace de stockage temporaire. Au contraire, dans le cas où la taille de l'entête du message est inférieure ou égale à la taille de son corps, c'est-à-dire dans le cas où il y a moins de parties de contrôle que de données, seules les parties de contrôle sont mises en mémoire dans l'espace de stockage temporaire. Mettre en mémoire uniquement les parties de contrôle des traces permet de préserver la mémoire pour pouvoir mettre en mémoire plus de messages, toutes les exigences d'un protocole n'ayant pas forcément spécifiquement besoin d'utiliser les données.

Quand le testeur est à nouveau disponible, une nouvelle notification de charge est de préférence émise pour relâcher les traces temporairement stockées, et pour poursuivre le transfert de nouvelles traces. Dans le cas où uniquement les parties de contrôle des traces ont été stockées, et si les exigences du protocole ont besoin d'utiliser les données, alors un verdict temporairement inconclusif, « temp-INC », peut être rendu. Ce verdict peut éventuellement être modifié par l'analyse de données provenant de traces entières lorsque le testeur est à nouveau disponible. Le verdict temporairement inconclusif peut alors devenir un verdict PASS ou FAIL dans la suite du test.

Le testeur vérifie avantageusement si les traces reçues satisfont ou pas les exigences formalisées afin de fournir des verdicts finaux, en les comparant notamment au comportement attendu du protocole spécifié par les propriétés formalisées.

Certaines propriétés peuvent être évaluées à partir de traces contenant uniquement des parties de contrôle, ou éventuellement très peu de données.

L'étape d'évaluation des formules se fonde avantageusement sur l'algorithme de résolution SLD (Sélectionné, Linéaire, Défini).

## Procédé

L'invention a encore pour objet, selon un autre de ses aspects, un procédé de test d'un protocole, notamment un protocole d'un réseau de communication, actif sur un équipement, notamment l'unité centrale d'un ordinateur, procédé dans lequel :

- un moniteur capture de façon continue des traces, correspondant à des séquences de messages du protocole sous test,
- lesdites traces capturées sont filtrées en utilisant des propriétés formalisées des exigences du protocole sous test, les traces filtrées étant notamment séparées en données et en parties de contrôle, et
- lesdites traces filtrées sont transférées à un testeur configuré pour émettre des verdicts en vérifiant si les traces satisfont les exigences des propriétés formalisées du protocole sous test,

procédé de test dans lequel, en cas de saturation du testeur, une notification de charge est émise afin d'interrompre le transfert des traces filtrées vers le testeur, lesdites traces sont au moins partiellement mises en mémoire dans une zone de stockage temporaire, notamment uniquement leurs parties de contrôle, avant que le transfert des traces filtrées ne soit repris lorsque le testeur est à nouveau disponible.

Les caractéristiques énoncées ci-dessus pour le système de test s'appliquent au procédé de test.

## Produit programme d'ordinateur

L'invention a encore pour objet, selon un autre de ses aspects, un produit programme d'ordinateur pour la mise en oeuvre du procédé de test d'un protocole tel que décrit précédemment, le produit programme d'ordinateur comportant des instructions de manière à ce que :

- des traces, correspondant à des séquences de messages du protocole sous test, soient capturées de façon continue,
- lesdites traces capturées soient filtrées en utilisant des propriétés formalisées des exigences du protocole sous test, les traces filtrées étant notamment séparées en données et en parties de contrôle, et
- lesdites traces filtrées soient transférées à un testeur configuré pour émettre des verdicts en vérifiant si les traces satisfont les exigences des propriétés formalisées du protocole sous test,

produit programme d'ordinateur comportant des instructions de manière à ce que, en cas de saturation du testeur, une notification de charge soit émise afin d'interrompre le transfert des traces filtrées vers le testeur, lesdites traces soient au moins partiellement mises en mémoire dans une zone de stockage temporaire, notamment uniquement leurs parties de contrôle, avant que le transfert des traces filtrées ne soit repris lorsque le testeur est à nouveau disponible.

Les caractéristiques énoncées ci-dessus pour le système de test s'appliquent au produit programme d'ordinateur.

Le produit programme d'ordinateur peut être réalisé directement sur le processeur de l'équipement sous test.

L'invention pourra être mieux comprise à la lecture de la description détaillée qui va suivre, d'exemples non limitatifs de mise en oeuvre de celle-ci, et à l'examen du dessin annexé, sur lequel :

- la figure 1 est un schéma représentant l'architecture du système de test selon l'invention,
- la figure 2 est un schéma représentant la génération de l'arbre de recouvrement,
- la figure 3 représente des exemples de messages filtrés,
- les figures 4 et 5 représentent deux types de message,
- la figure 6 est un schéma représentant les étapes de mise en mémoire et de notification, et
- les figures 7 et 8 représentent des exemples de test d'un protocole selon l'invention.

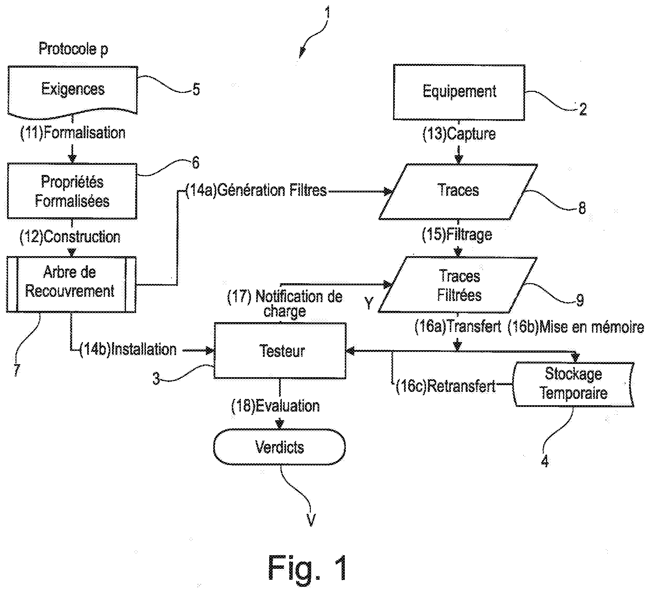

L'architecture du système de test 1 d'un protocole P selon l'invention est représentée à la figure 1. Le système de test 1 est destiné au test d'un protocole P actif sur un équipement 2, le protocole P étant par exemple le protocole d'un réseau de communication, et l'équipement 2 l'unité centrale d'un ordinateur. Pour ce faire, le système de test 1 comporte un testeur 3 configuré pour émettre des verdicts V en vérifiant si les exigences des propriétés du protocole P sous test sont respectées.

Le système de test 1 est configuré pour formaliser, lors d'une étape 11, les exigences 5 des propriétés du protocole sous test P. Pour ce faire, dans l'exemple décrit, une syntaxe et une sémantique fondées sur la logique de Horn sont utilisées et conduisent à un ensemble de formules représentant les propriétés formalisées 6. Un arbre de recouvrement 7 est ensuite construit, lors d'une étape 12, à partir de l'ensemble de formules 6 représentant les exigences formalisées des propriétés du protocole sous test.

Dans une variante, au moins une des étapes de formalisation des exigences 5 des propriétés du protocole sous test P et de construction de l'arbre de recouvrement 7 est réalisée par un ou plusieurs modules externes, en amont du procédé de test, les formules 6 et/ou l'arbre de recouvrement 7 étant fournis, le cas échéant, au système de test 1, par exemple sous forme de fichiers.

Un moniteur capture de façon continue, lors d'une étape 13, des traces 8 provenant de l'équipement 2, correspondant à des séquences de messages du protocole P sous test.

L'arbre de recouvrement 7 sert, dans l'exemple décrit, lors d'une étape 14a, à générer un filtre pour filtrer les traces capturées 8, lors d'une étape 15, utilisant ainsi les propriétés formalisées du protocole sous test P. Le filtre est avantageusement configuré pour séparer les traces 8 en données et en parties de contrôle, et pour filtrer les messages non requis par les exigences, qui ne seront pas pris en compte par le testeur 3 pour l'évaluation du protocole P.

Lors d'une étape 14b d'installation, l'arbre de recouvrement est en outre envoyé au testeur 3 afin de définir les verdicts V. Cette étape 14b prépare toutes les données de la propriété sous test.

Un module de transfert transfère, lors d'une étape 16a, les traces filtrées 9 au testeur 3, afin qu'il émette des verdicts V en vérifiant si lesdites traces 9 satisfont les exigences des propriétés formalisées du protocole P sous test, lors d'une étape d'évaluation 18.

En cas de saturation du testeur 3, une notification de charge Y est émise, le transfert des traces filtrées vers le testeur 3 est interrompu et ces dernières sont mises en mémoire, au moins partiellement, lors d'une étape 16b, dans une zone de stockage temporaire 4 du système de test 1.

Le testeur 3 sature par exemple lorsque sa priorité baisse, pour décharger l'équipement 2 sous test.

Dans une variante ou en combinaison, le testeur 3 sature lorsqu'il atteint une limite de quantité de traces 9 pouvant être traitées.

Lorsque le testeur 3 est à nouveau disponible, une nouvelle notification de charge est de préférence émise pour relâcher, lors d'une étape 16c, les traces 9 temporairement mises en mémoire dans la zone de stockage 4, et pour poursuivre le transfert de nouvelles traces.

Les traces recueillies lors de l'étape de capture 13 sont, dans l'exemple décrit, des traces brutes issues du moniteur, appelé « *sniffer* » en anglais. Le filtrage de l'étape 15 permet d'enregistrer le flux entrant et sortant sur le protocole sous test P.

La mise en mémoire des traces 9 dans la zone de stockage temporaire 4 est avantageusement réalisée en utilisant des tables de hachage.

Le testeur 3 est configuré pour émettre cinq types de verdicts V, « PASS », « FAIL », « TIME-FAIL », « INC » et « temp-INC ». Les verdicts V sont de préférence stockés dans des fichiers.

Préférentiellement, toutes les étapes précédemment décrites sont accomplies, et, encore plus préférentiellement, elles sont accomplies dans l'ordre décrit.

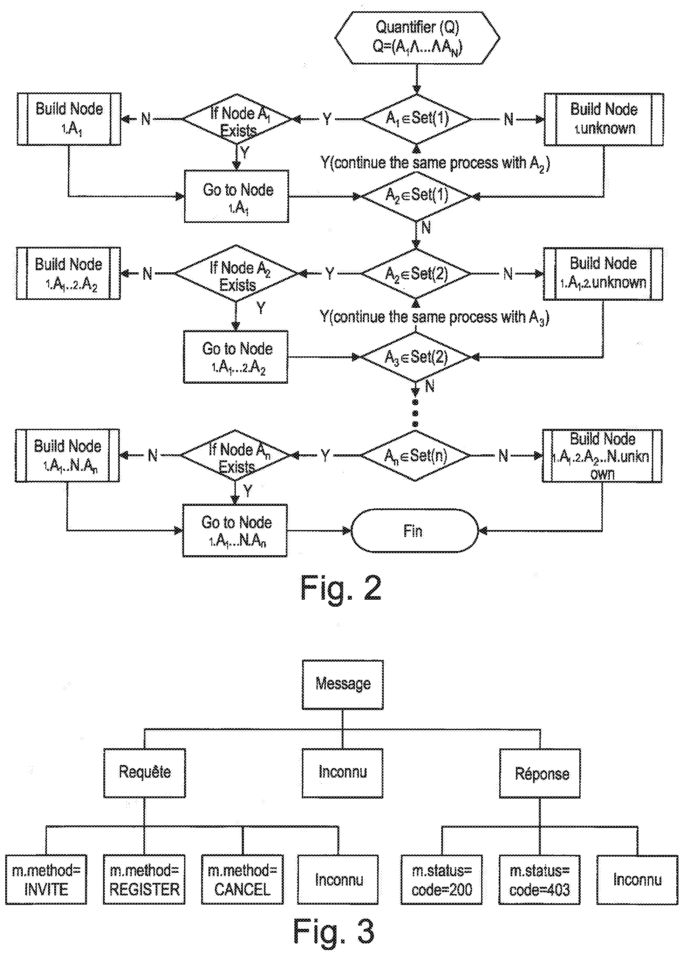

La figure 2 représente la procédure de construction de l'arbre de recouvrement 7 à partir d'une formule 6. Chaque quantificateur Q de la formule 6 parcourt l'arbre 7 pour construire les noeuds A.

La figure 3 montre un exemple de messages du protocole SIP filtrés par l'arbre de recouvrement 7. D'après le standard SIP, une requête, dans le corps du message, est définie par le champ « *method* » et une réponse par le champ « *status* ». Les messages peuvent donc avantageusement être filtrés et stockés selon l'arbre de recouvrement 7. Si un message n'est pas reconnu (notification « *inconnu* »), il sera non retenu grâce au filtrage.

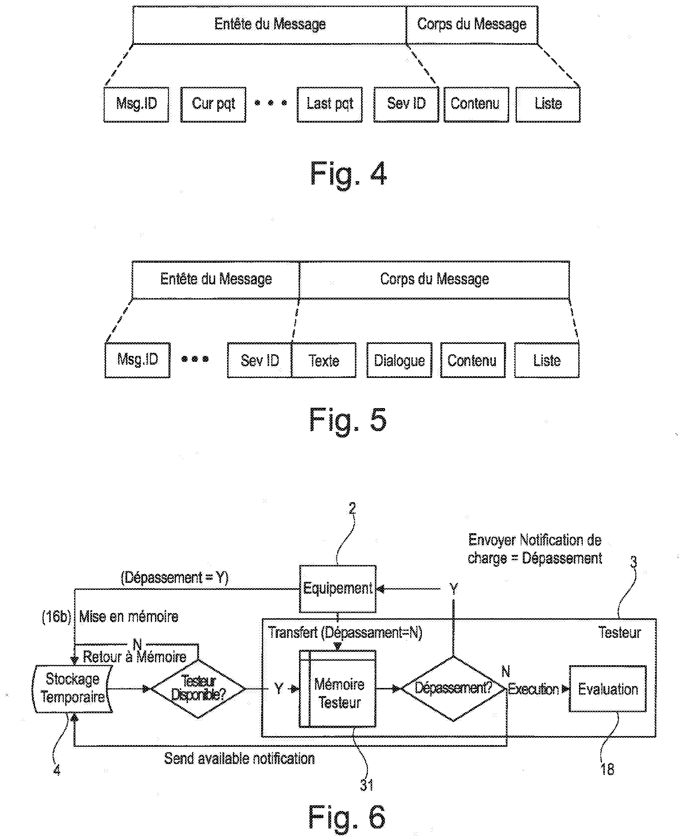

La figure 4 représente un exemple de message où la taille de l'entête est supérieure à celle du corps.

La figure 5 représente un exemple de message où la taille de l'entête est inférieure ou égale à celle du corps. Dans ce cas, et en cas de saturation du testeur 3, seules les parties de contrôle des traces filtrées correspondant à ce type de messages sont mises en mémoire dans la zone de stockage temporaire 4 lors de l'étape 16b.

La figure 6 représente le processus de transfert et/ou de mise en mémoire des traces filtrées 9 selon la charge du testeur 3. Le testeur 3 comporte une mémoire tampon 31 et une fonction vérifiant si ladite mémoire tampon 31 est en dépassement lorsque des traces filtrées 9 lui sont transférées. Si la mémoire tampon 31 du testeur 3 a déjà atteint sa capacité maximale, l'équipement 2 reçoit une notification de charge Y afin de rediriger les traces 9 vers la zone de stockage temporaire 4 pour éviter le dépassement. Au contraire, si la mémoire tampon 31 du testeur 3 est dans un état stable, une notification de disponibilité N est envoyée à la zone de stockage temporaire 4 pour relâcher les traces stockées et à l'équipement 2 pour retourner au processus normal de transport des traces.

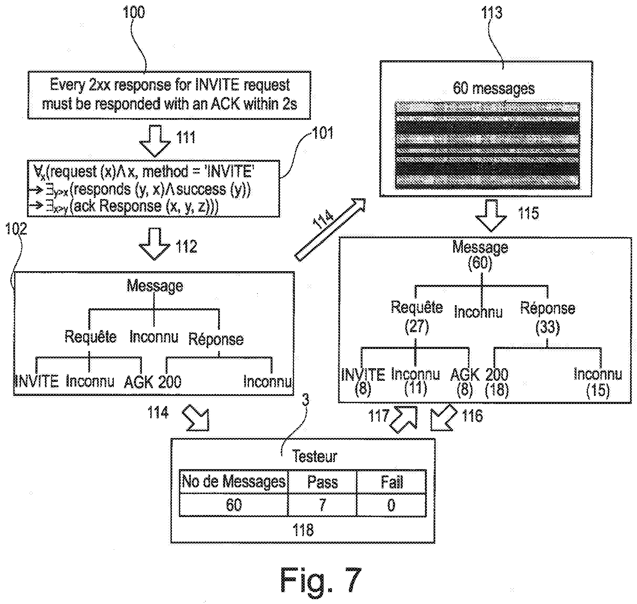

La figure 7 représente un exemple de test selon l'invention. L'exigence 100 du protocole P dont la performance doit être testée est « Toute réponse 2xx pour une requête INVITE doit être répondue avec un ACK en 2 secondes ». Cette exigence est formalisée à l'étape 111 par la formule 101. L'arbre de recouvrement 102 correspondant à cette formule 101 est généré lors d'une étape 112. L'arbre 102 est transféré au processeur de l'équipement 2 pour être appliqué comme filtre, aux étapes 113 et 114, aux messages capturés du protocole P.

Dès que le processeur de l'équipement 2 a capturé une trace de 60 messages, filtrée à l'étape 115, il va vérifier la valeur de la notification de charge. Dans l'exemple décrit, la valeur de notification de charge est égale à N, ce qui signifie que le testeur 3 est disponible et qu'il n'est pas nécessaire de mettre temporairement en mémoire les traces. Le processeur envoie directement les traces filtrées au testeur 3 à l'étape 116.

Lorsque le testeur 3 reçoit la trace, il la teste pour la propriété formalisée lors d'une étape 118, et renvoie la valeur de notification de charge N au processeur, lors de l'étape 117, puisque le testeur est toujours disponible pour tester les traces suivantes. Sept verdicts « PASS » sont reçus dans l'exemple considéré, pour zéro verdicts « FAIL ».

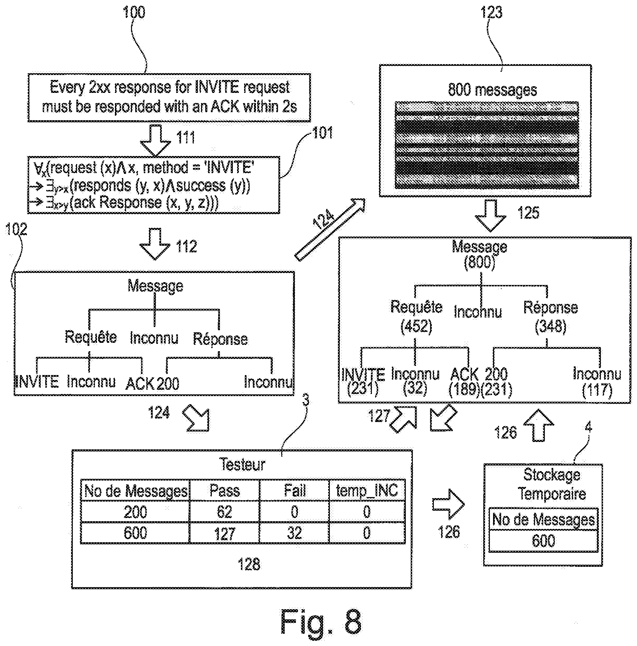

Un autre exemple de test selon l'invention est représenté à la figure 8. La même exigence sous test 100 est utilisée et formalisée de la même manière en la formule 101, conduisant à l'arbre de recouvrement 102. 800 messages sont capturés et filtrés aux étapes 123 et 124. Le processeur de l'équipement 2 vérifie la notification de charge à l'étape 125. Dans l'exemple considéré, le testeur est dans un état de priorité basse ce qui indique qu'il ne peut gérer un nombre important de traces à cet instant, une valeur Y de notification de charge est alors émise afin de mettre en mémoire les 600 traces entrantes en surplus dans la zone de stockage temporaire 106 dans une étape 126. Lorsque le testeur 3 a fini de tester les 200 premières traces, il renvoie une valeur N de notification de charge au processeur et à la zone de stockage 106, afin de renvoyer au testeur 3, lors d'une étape 127, les 600 messages mis en mémoire pour qu'il puisse les tester. 189 verdicts « PASS » sont reçus dans l'exemple considéré, et 32 verdicts « FAIL ».

L'invention n'est pas limitée aux exemples qui viennent d'être décrits.

L'équipement sous test 2 peut également être un équipement contenant une pile protocolaire et un espace mémoire, tel qu'un smartphone, un système embarqué, etc....

Le système de test selon l'invention permet de réaliser un nombre beaucoup moins élevé de comparaisons que les méthodes connues pour obtenir le verdict final, par exemple 26 comparaisons au lieu de 89 pour l'exemple de la figure 7.

Le domaine d'application du système de test selon l'invention concerne particulièrement l'ingénierie des protocoles et des services de communication. Le système de test passif peut s'appliquer à des protocoles des couches OSI 3 à 7 (Open Systems Interconnection), ou aux protocoles SIP et OLSR (Optimized Link State Routing, portant la référence RFC3626).

Le système de test selon l'invention peut être utilisé dans des systèmes communicants intégrant des protocoles ou services pouvant faire l'objet d'un monitorage. Il est particulièrement avantageux de pouvoir tester ces protocoles de manière passive sans perturber le comportement du système communicant et tout en l'utilisant à d'autres fins, telles que l'intégration d'autres composants, des simulations, un développement tierce ou l'analyse des performances.

Le système selon l'invention peut être utilisé dans des outils d'analyse et de monitorage des réseaux.

Le système de test selon l'invention peut être utilisé pour des systèmes distribués ou des systèmes non distribués. Dans le cas de systèmes distribués, un protocole peut être utilisé pour synchroniser les différents équipements.

L'expression « comportant un » doit être comprise comme étant synonyme de « comportant au moins un », sauf si le contraire est spécifié.

## Revendications

1. Système de test (1) d'un protocole (P), notamment un protocole d'un réseau de communication, actif sur un équipement (2), notamment l'unité centrale d'un ordinateur, le système de test (1) comportant :

   - un moniteur configuré pour capturer de façon continue des traces (8), correspondant à des séquences de messages du protocole sous test (P),
   - un filtre des traces capturées utilisant des propriétés formalisées des exigences du protocole sous test (P), notamment configuré pour séparer lesdites traces en données et en parties de contrôle,
   - une zone de stockage temporaire (4),
   - un testeur, et
   - un module de transfert agencé pour transférer les traces filtrées (9) au testeur (3) configuré pour émettre des verdicts (V) en vérifiant si les traces satisfont les exigences des propriétés formalisées du protocole sous test (P),

   système de test dans lequel, en cas de saturation du testeur (3) conduisant à l'émission d'une notification de charge (Y), le module de transfert est configuré pour interrompre le transfert des traces filtrées (9) vers le testeur (3) et mettre en mémoire au moins partiellement lesdites traces dans la zone de stockage temporaire (4), notamment uniquement leurs parties de contrôle, avant de reprendre le transfert des traces filtrées (9) lorsque le testeur (3) est à nouveau disponible.

2. Système selon la revendication 1, dans lequel un arbre de recouvrement indexé (7) est construit à partir des propriétés formalisées des exigences du protocole sous test (P).

3. Système selon la revendication précédente, dans lequel le filtre des traces capturées (8) est l'arbre de recouvrement indexé (7).

4. Système selon la revendication 2 ou 3, dans lequel l'arbre de recouvrement indexé (7) est en outre envoyé au testeur (3) afin de définir les verdicts (V).

5. Système selon l'une quelconque des revendications précédentes, dans lequel le filtre des traces capturées (8) est configuré pour filtrer les messages non requis par les exigences, qui ne doivent pas être pris en compte par le testeur (3).

6. Système selon l'une quelconque des revendications précédentes, dans lequel le testeur (3) sature lorsque sa priorité est baissée, notamment pour décharger l'équipement sous test (2).

7. Système selon l'une quelconque des revendications précédentes, dans lequel le testeur (3) sature lorsqu'il atteint une limite de quantité de traces pouvant être traitées.

8. Système selon l'une quelconque des revendications précédentes, dans lequel le testeur (3) comporte une mémoire tampon (31) et une fonction vérifiant si ladite mémoire tampon est en dépassement.

9. Système selon la revendication précédente, dans lequel le testeur (3) envoie une notification de charge (Y) à l'équipement (2) si la mémoire tampon (31) du testeur (3) est en dépassement, afin de rediriger les traces filtrées (9) vers la zone de stockage temporaire (4).

10. Système selon l'une quelconque des revendications précédentes, dans lequel la taille de l'entête des messages du protocole (P) est inférieure ou égale à celle du corps des messages, et, en cas de saturation du testeur (3), seules les parties de contrôle des traces filtrées (9) correspondantes à ces messages sont mises en mémoire dans la zone de stockage temporaire (4).

11. Système selon l'une quelconque des revendications précédentes, dans lequel le testeur (3) est configuré pour émettre cinq types de verdicts (V), « PASS », « FAIL », « TIME-FAIL », « INC » et « temp-INC ».

12. Système selon l'une quelconque des revendications précédentes, dans lequel les verdicts de test (V) sont stockés dans des fichiers.

13. Système selon l'une quelconque des revendications précédentes, dans lequel les exigences des propriétés du protocole (P) sont formalisées en utilisant une syntaxe et une sémantique fondées sur la logique de Horn conduisant à un ensemble de formules (6), à partir desquelles un arbre de recouvrement indexé (7) est construit.

14. Procédé de test d'un protocole (P), notamment un protocole d'un réseau de communication, actif sur un équipement (2), notamment l'unité centrale d'un ordinateur, procédé dans lequel :

   - un moniteur capture de façon continue des traces (8), correspondant à des séquences de messages du protocole sous test (P),
   - lesdites traces capturées (8) sont filtrées en utilisant des propriétés formalisées des exigences du protocole sous test (P), les traces filtrées étant notamment séparées en données et en parties de contrôle, et
   - lesdites traces filtrées (9) sont transférées à un testeur (3) configuré pour émettre des verdicts (V) en vérifiant si les traces satisfont les exigences des propriétés formalisées du protocole sous test (P),

   procédé de test dans lequel, en cas de saturation du testeur (3), une notification de charge (Y) est émise afin d'interrompre le transfert des traces filtrées (9) vers le testeur (3), lesdites traces (9) sont au moins partiellement mises en mémoire dans une zone de stockage temporaire (4), notamment uniquement leurs parties de contrôle, avant que le transfert des traces filtrées (9) ne soit repris lorsque le testeur (3) est à nouveau disponible.

15. Produit programme d'ordinateur pour la mise en oeuvre du procédé de test d'un protocole (P) tel que défini à la revendication précédente, le produit programme d'ordinateur comportant des instructions de manière à ce que :

   lorsqu'elles sont exécutées

   - des traces (8), correspondant à des séquences de messages du protocole sous test (P), soient capturées de façon continue,
   - lesdites traces capturées (8) soient filtrées en utilisant des propriétés formalisées des exigences du protocole sous test (P), les traces filtrées étant notamment séparées en données et en parties de contrôle, et
   - lesdites traces filtrées (9) soient transférées à un testeur (3) configuré pour émettre des verdicts (V) en vérifiant si les traces satisfont les exigences des propriétés formalisées du protocole sous test (P),

   produit programme d'ordinateur comportant des instructions de manière à ce que, en cas de saturation du testeur (3), une notification de charge (Y) soit émise afin d'interrompre le transfert des traces filtrées (9) vers le testeur (3), lesdites traces (9) soient au moins partiellement mises en mémoire dans une zone de stockage temporaire (4), notamment uniquement leurs parties de contrôle, avant que le transfert des traces filtrées (9) ne soit repris lorsque le testeur (3) est à nouveau disponible.

**Patentansprüche**

1. System (1) zum Testen eines Protokolls (P), insbesondere eines Protokolls eines Kommunikationsnetzwerks, arbeitend auf einem Gerät (2), insbesondere der CPU eines Computers, wobei das System (1) zum Testen umfasst:

   - eine Überwachungseinheit, die dazu ausgelegt ist, kontinuierlich Spuren (8) zu erfassen, die Folgen von Nachrichten des zu testenden Protokolls (P) entsprechen,
   - einen Filter für die erfassten Spuren, welcher die formalen Eigenschaften der Anforderungen des zu testenden Protokolls (P) nutzt, insbesondere so ausgelegt, dass er diese Spuren in Daten und Steuerungsanteile aufteilen kann,
   - einen Zwischenspeicherbereich (4),
   - eine Testeinheit, und

- Übertragungsmodul welches dazu ausgelegt ist, die gefilterten Spuren (9) an die Testeinheit (3) zu übertragen, die dazu ausgelegt ist, Urteile (V) auszugeben, indem sie überprüft, ob die Spuren die formalen Eigenschaften der Anforderungen des zu testenden Protokolls (P) erfüllen,

wobei in dem System zum Testen im Fall einer Sättigung der Testeinheit (3), die zu der Ausgabe einer Last-Benachrichtigung (Y) führt, das Übertragungsmodul dazu ausgelegt ist, die Übertragung der gefilterten Spuren (9) an die Testeinheit (3) zu unterbrechen und diese Spuren zumindest teilweise in dem Zwischenspeicherbereich (4) zu speichern, insbesondere nur deren Steuerungsanteile, bevor die Übertragung der gefilterten Spuren (9) wieder aufgenommen wird, wenn die Testeinheit (3) wieder verfügbar ist.

2. System nach Anspruch 1, wobei eine indizierter Überdeckungsbaum (7) aus den formalen Eigenschaften der Anforderungen des zu testenden Protokolls (P) konstruiert ist.

3. System nach dem vorhergehenden Anspruch, wobei der Filter der erfassten Spuren (8) der indizierte Überdeckungsbaum (7) ist.

4. System nach Anspruch 2 oder 3, wobei der indizierte Überdeckungsbaum (7) zusätzlich an die Testeinheit (3) gesendet wird, um die Urteile (V) zu bilden.

5. System nach einem der vorhergehenden Ansprüche, wobei der Filter der erfassten Spuren (8) dazu ausgelegt ist, die nach den Anforderungen nicht erforderlichen Nachrichten herauszufiltern, die von der Testeinheit (3) nicht berücksichtigt werden dürfen.

6. System nach einem der vorhergehenden Ansprüche, wobei die Testeinheit (3) in Sättigung geht, wenn ihre Priorität verringert wird, insbesondere um das zu testende Gerät (2) zu entlasten.

7. System nach einem der vorhergehenden Ansprüche, wobei die Testeinheit (3) in Sättigung geht, wenn sie eine Grenze für die Spuren, die verarbeitet werden können, erreicht.

8. System nach einem der vorhergehenden Ansprüche, wobei die Prüfvorrichtung (3) einen Pufferspeicher (31) umfasst und eine Funktion, die überprüft, ob der Pufferspeicher am Überlaufen ist.

9. System nach dem vorhergehenden Anspruch, wobei die Testeinheit (3) eine Last-Benachrichtigung (Y) an das Gerät (2) sendet, wenn der Pufferspeicher (31) der Testeinheit (3) am Überlaufen ist, um die gefilterten Spuren (9) in den Zwischenspeicherbereich (4) umzuleiten.

10. System nach einem der vorhergehenden Ansprüche, wobei die Größe des Headers der Nachrichten des Protokolls (P) kleiner als oder gleich derjenigen des Nachrichtenkörpers ist und, falls die Testeinheit (3) in Sättigung geht, nur Steuerungsanteile der gefilterten Spuren (9), die diesen Nachrichten entsprechen, im Zwischenspeicherbereich (4) gespeichert werden.

11. System nach einem der vorhergehenden Ansprüche, wobei die Testeinheit (3) dazu ausgelegt ist, fünf Arten von Urteilen (V) auszugeben, und zwar "PASS", "FAIL", "TIME-FAIL", "INC" und "temp - INC".

12. System nach einem der vorhergehenden Ansprüche, wobei die Test-Urteile (V) in Dateien gespeichert werden.

13. System nach einem der vorhergehenden Ansprüche, wobei die Anforderungen der formalen Eigenschaften des Protokolls (P) unter Verwendung einer Syntax und Semantik auf der Grundlage der Horn-Logik zu einem Satz von Formeln (6) führt, aus denen ein indizierter Überdeckungsbaum (7) konstruiert ist.

14. Verfahren zum Testen eines Protokolls (P), insbesondere eines Protokolls eines Kommunikationsnetzwerkes, welches auf einem Gerät (2) ausgeführt wird, insbesondere auf der CPU eines Computers, wobei nach dem Verfahren:

- eine Überwachungseinheit kontinuierlich Spuren (8) erfasst, die Folgen von Nachrichten des zu testenden Protokolls (P) entsprechen,
- die erfassten Spuren (8) gefiltert werden, wobei die formalen Eigenschaften der Anforderungen des zu testenden Protokolls (P) genutzt werden, wobei diese Spuren insbesondere in Daten und Steuerungsanteile aufgeteilt werden,

- die gefilterten Spuren (9) an eine Testeinheit (3) übertragen werden, die dazu ausgelegt ist, Urteile (V) auszugeben, indem sie überprüft, ob die Spuren die formalen Eigenschaften der Anforderungen des zu testenden Protokolls (P) erfüllen,

wobei nach dem Verfahren zum Testen im Fall einer Sättigung der Testeinheit (3) eine Last-Benachrichtigung (Y) ausgegeben wird, um die Übertragung der gefilterten Spuren (9) an die Testeinheit (3) zu unterbrechen und diese Spuren (9) zumindest teilweise in einem Zwischenspeicherbereich (4) zu speichern, insbesondere nur deren Steuerungsanteile, bis die Übertragung der gefilterten Spuren (9) wieder aufgenommen wird, wenn die Testeinheit (3) wieder verfügbar ist.

15. Ein Computerprogrammprodukt zur Durchführung des Verfahrens zum Testen eines Protokolls (P), wie es in dem vorhergehenden Anspruch definiert ist, wobei das Computerprogrammprodukt Anweisungen umfasst, die, wenn sie ausgeführt werden:

- die erfassten Spuren (8) entsprechend den Folgen von Nachrichten des zu testenden Protokolls (P) fortlaufend erfassen,
- die erfassten Spuren (8) unter Verwendung von formalen Eigenschaften der Anforderungen des zu testenden Protokolls (P) filtern, wobei die gefilterten Spuren insbesondere in Daten und Steuerungsanteile aufgeteilt werden, und
- die gefilterten Spuren (9) an eine Testeinheit (3) übertragen werden, die dazu ausgelegt ist, Urteile (V) auszugeben, indem sie überprüft, ob die Spuren die formalen Eigenschaften der Anforderungen des zu testenden Protokolls (P) erfüllen,

wobei das Computerprogrammprodukt ferner Anweisungen derart umfasst, dass, falls die Testeinheit (3) in Sättigung läuft, eine Last-Benachrichtigung (Y) ausgegeben wird, um die Übertragung der gefilterten Spuren (9) an die Testeinheit (3) zu unterbrechen, wobei die gefilterten Spuren (9) zumindest teilweise in einem Zwischenspeicherbereich (4) gespeichert werden, insbesondere nur deren Steuerungsanteile, bis die Übertragung der gefilterten Spuren (9) wieder aufgenommen wird, wenn die Testeinheit (3) wieder verfügbar ist.

## Claims

1. A system (1) for testing a protocol (P), preferably a communications network protocol, running on a piece of equipment (2), preferably the central processing unit of a computer, the test system (1) comprising:

- a sniffer configured for continuously capturing traces (8), corresponding to message sequences of the protocol (P) being tested,
- a captured-traces filter using formalized properties of the requirements of the protocol (P) being tested, preferably configured to separate said traces into data and control parts,
- a temporary-storage zone (4),
- a tester, and
- a transfer module designed to transfer the filtered traces (9) to the tester (3) configured to emit verdicts (V) by checking whether the traces meet the requirements of the formalized properties of the protocol (P) being tested,

test system in which, if the tester (3) becomes saturated leading to the emitting of a workload notification (Y), the transfer module is configured to interrupt the transfer of the filtered traces (9) towards the tester (3) and to at least partially store said traces in memory in the temporary-storage zone (4), preferably only the control parts thereof, before resuming the transfer of the filtered traces (9) when the tester (3) becomes available again.

2. The system as claimed in claim 1, in which an index spanning tree (7) is constructed from the formalized properties of the requirements of the protocol (P) being tested.

3. The system as claimed in the preceding claim, in which the captured-traces (8) filter is the index spanning tree (7).

4. The system as claimed in claim 2 or 3, in which the index spanning tree (7) is also sent to the tester (3) in order to define the verdicts (V).

5. The system as claimed in any one of the preceding claims, in which the captured-traces (8) filter is configured to filter out the messages not required by the requirements, which need not be taken into account by the tester (3).

6. The system as claimed in any one of the preceding claims, in which the tester (3) becomes saturated when its priority is lowered, preferably in order to unload the equipment (2) being tested.

7. The system as claimed in any one of the preceding claims, in which the tester (3) becomes saturated when it reaches a limit on the quantity of traces that can be processed.

8. The system as claimed in any one of the preceding claims, in which the tester (3) comprises a buffer memory (31) and a function that checks whether said buffer memory is overflowing.

9. The system as claimed in the preceding claim, in which the tester (3) sends a workload notification (Y) to the equipment (2) if the buffer memory (31) of the tester (3) is overflowing, so as to redirect the filtered traces (9) to the temporary-storage zone (4).

10. The system as claimed in any one of the preceding claims, in which the size of the header of the messages of the protocol (P) is less than or equal to that of the body of the messages and, if the tester (3) becomes saturated, only the control parts of the filtered traces (9) corresponding to these messages are stored in memory in the temporary-storage zone (4).

11. The system as claimed in any one of the preceding claims, in which the tester (3) is configured to emit five types of verdict (V): "PASS", "FAIL", "TIME-FAIL", "INC" and "temp-INC".

12. The system as claimed in any one of the preceding claims, in which the test verdicts (V) are stored in files.

13. The system as claimed in any one of the preceding claims, in which the requirements for the properties of the protocol (P) are formalized using syntax and semantics which are based on Horn logic, leading to a set of formulae (6), from which an index spanning tree (7) is constructed.

14. A method for testing a protocol (P), preferably a communications network protocol, running on a piece of equipment (2), preferably the central processing unit of a computer, in which method:

   - a sniffer continuously captures traces (8) corresponding to sequences of messages of the protocol (P) being tested,
   - said captured traces (8) are filtered using formalized properties of the requirements of the protocol (P) being tested, the filtered traces being preferably separated into data and control parts, and
   - said filtered traces (9) are transferred to a tester (3) configured to emit verdicts (V) by checking whether the traces meet the requirements of the formalized properties of the protocol (P) being tested,

   test method in which, if the tester (3) becomes saturated, a workload notification (Y) is emitted so as to interrupt the transfer of the filtered traces (9) to the tester (3), said traces (9) are at least partially stored in memory in a temporary-storage zone (4), preferably only the control parts thereof, before the transfer of the filtered traces (9) is resumed when the tester (3) becomes available again.

15. A computer program product for implementing the method for testing a protocol (P) as defined in the preceding claim, the computer program product comprising instructions so that, when executed:

   - traces (8), corresponding to sequences of messages of the protocol (P) being tested, are captured continuously,
   - said captured traces (8) are filtered using formalized properties of the requirements of the protocol (P) being tested, the filtered traces being preferably separated into data and control parts, and
   - said filtered traces (9) are transferred to a tester (3) configured to emit verdicts (V) by checking whether the traces meet the requirements of the formalized properties of the protocol (P) being tested,

   the computer program product comprising instructions so that, if the tester (3) becomes saturated, a workload notification (Y) is emitted so as to interrupt the transfer of the filtered traces (9) to the tester (3), said traces (9) are at least partially stored in memory in a temporary-storage zone (4), preferably only the control parts thereof, before the transfer of the filtered traces (9) is resumed when the tester (3) becomes available again.

Protocole p

Exigences — 5

(11)Formalisation

Propriétés
Formalisées — 6

(12)Construction

Arbre de
Recouvrement

7

(14b)Installation →

3 —

Equipement — 2

(13)Capture

(14a)Génération Filtres → Traces — 8

(15)Filtrage

(17) Notification de
charge

Y

Traces
Filtrées — 9

(16a)Transfert  (16b)Mise en mémoire

Testeur ←

(16c)Retransfert — Stockage
Temporaire

(18)Evaluation

4

Verdicts

V

1

# Fig. 1

Fig. 2

Fig. 3

| Entête du Message | | | | Corps du Message | |
|---|---|---|---|---|---|
| Msg.ID | Cur pqt | • • • Last pqt | Sev ID | Contenu | Liste |

## Fig. 4

| Entête du Message | | | Corps du Message | | |
|---|---|---|---|---|---|
| Msg.ID | • • • | Sev ID | Texte | Dialogue | Contenu | Liste |

## Fig. 5

## Fig. 6

Fig. 7

**Fig. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03047280 A
- US 20070124456 A
- US 20040054776 A

**Littérature non-brevet citée dans la description**

- **LALANNE et al.** Data-centric property formulation for passive testing of communication protocols. *IAS-ME/WSEAS, ACC' 11/MMACTEE,* vol. 11, 176-181
- **LALANNE et al.** A formal data-centric approach for passive testing of communication protocols. *IEEE/ACM Transactions on networking*
- **CHE et al.** A logic-based passive testing approach for the validation of communicating protocols. *conférence ENASE,* 2012, 53-64